# EUROPÄISCHE PATENTSCHRIFT

(11) **EP 1 510 187 B1**
(45) Veröffentlichungstag und Bekanntmachung des Hinweises auf die Patenterteilung: **11.02.2009**
(21) Anmeldenummer: 04015714.1
(22) Anmeldetag: 03.07.2004
(51) Int. Cl.: A61C 13/00, A61C 13/083, A61C 13/09

(54) **Verfahren zur Herstellung eines dentalen Restaurationsteils**
Method for manufacturing a dental restoration piece
Procédé de réalisation d'une pièce de reconstruction dentaire

(30) Priorität: 26.08.2003 DE 10339246
(43) Veröffentlichungstag der Anmeldung: 02.03.2005
(73) Patentinhaber: Firma Ivoclar Vivadent AG, 9494 Schaan (LI)
(72) Erfinder: Hopfauf, Simonette, A-6845 Hohenems (AT); Rheinberger, Volker Dr., FL 9490 Vaduz (LI)
(74) Vertreter: Baronetzky, Klaus

(56) Entgegenhaltungen:
- DE-U1- 8 227 782
- DE-U1- 9 204 832
- US-A- 4 104 798
- US-B1- 6 206 958

## Beschreibung

Die Erfindung betrifft ein Verfahren zur Herstellung eines dentalen Restaurationsteiles, ein dentales Restaurationsteil per se sowie die Verwendung einer Wärmeschutzpaste während der thermischen Behandlung eines Dental-Restaurationsteils nach dem Oberbegriff des Ansprüche 1, 16 und 18.

Aus der US-B1-6,206,958 ist ein Verfahren zur Herstellung eines Dentalrestaurationsteils mit einem Gerüst und einer Verblendung bekannt, wobei aus den Materialangaben herleitbar ist, dass die Materialien unterschiedliche Wärmeausdehnungskoeffizienten haben. Aus der DE-U1 82 27 782 ist ein Restaurationsteil mit einem Gerüst und einer Verblendung bekannt, deren Wärmeausdehnungskoeffizient größer als der Wärmeausdehnungskoeffizient des Gerüstmaterials ist. Der Stand der Technik vermag Haarrisse in der Verblendung bei thermischer Behandlung des Restaurationsteils nicht sicher zu verhindern.

Ein derartiges Verfahren sieht regelmäßig die Verwendung von zwei Materialen vor. Häufig werden auf Metallgerüsten Verblendkunststoffe angebracht, um eine ästhetisch zufriedensellende Restauration zu ermöglichen, und um die Biokompatibilität zu erhöhen.

Verblendkunststoffe werden regelmäßig durch Licht oder Wärme oder durch Kombination von Licht und Wärme ausgehärtet. Dies bedingt eine Temperaturerhöhung. Problem bei an dem Metallgerüst anliegenden Verblendkunststoffen ist dann der zwischen Metall und Kunststoff unterschiedliche Wärmeausdehnungskoeffizient. Während bei der Erwärmung, also bei positivem Temperaturgradienten, der Verblendkunststoff regelmäßig noch weich ist, ist er beim Abkühlen ausgehärtet, so dass Spannungen entstehen, nachdem Kunststoff sich bei Abkühlung stärker kontrahiert als Metall.

Nachdem der Wärmeausdehnungskoeffizient von Kunststoff größer ist, könnten Haarrisse im Verblendmaterial entstehen, die entweder umgehend nach der Polymerisation, nach dem Ausarbeiten, aber gegebenfalls auch erst nach einiger Zeit entstehen. Derartige Risse können in der Praxis zu Bakterienherden führen.

Abgesehen von den hygienischen Problemen leidet auch die ganze Festigkeit des Verblendkunststoffes, so dass die Gefahr besteht,

dass sich Teile ablösen. Typischerweise entsteht die Spannungsentladung auch noch an den dünnsten Stellen der Restauration, beispielsweise interdental.

Um derartige Probleme zu verhindern, ist es bereits vorgeschlagen worden, den Wärmeausdehnungskoeffizienten von Kunststoff möglichst an den verwendeten Metalllegierungen anzupassen. Diesem Vorhaben sind jedoch aus physikalischen Gründen Grenzen gesetzt, zumal aus Funktionsgründen regelmäßig lichthärtende und/oder warmhärtende Polymerkunststoffe eingesetzt werden müssen.

Zwar könnte man eine Ausgleichsschicht auf das Metallgerüst aufbringen, bevor der Verblendkunststoff aufgebracht wird, mit dem Ziel, dass die Ausgleichsschicht elastisch nachgibt, und Spannungsrisse im sich kontrahierenden Verblendkunststoff vermieden werden.

Derartige Lösungen sind jedoch technisch problematisch zu realisieren, aufwändig, und dennoch ist die Haftung des Verblendkunststoffes schlechter.

Daher liegt der Erfindung die Aufgabe zugrunde, ein Verfahren zur Herstellung eines Dentalrestaurationsteil gemäß dem Oberbegriff von Anspruch 1 zu schaffen, das eine verbesserte Langzeitstabilität ohne hygienische und Festigkeitsprobleme bei zweischichtigen Dentalrestaurationsteilen bietet.

Diese Aufgabe wird erfindungsgemäß durch die Ansprüche 1, 16 und 18 gelöst. Vorteilhafte Weiterbildungen ergeben sich aus den Unteransprüchen.

Die erfindungsgemäße Lösung sieht vor, dass vor einer thermischen Behandlung des Restaurationsteils mindestens der grösste Teil des von der Verblendung nicht abgedeckten, freiliegenden Bereichs des Gerüsts, insbesondere der gesamte freiliegende Bereich, zur Wärmedämmung mit einer Wärmeschutzpaste abgedeckt wird, wobei die Wärmeschutzpaste auf diesen Bereich aufgetragen wird. Die Wärmeschutzpaste bildet eine Wärmedämmung für die besonders gut wärmeleitenden metallischen Bereiche. Bei Erwärmung durch Konvektion oder durch Strahlungswärme, wie sie regelmäßig vorgesehen ist, ergibt sich durch die Verwendung der Wärmeschutzpaste, dass das Metallgerüst weniger stark erwärmt wird als der Verblendkunststoff. Die Temperaturdifferenz kann beispielsweise durchaus 40°C betragen, je nach dem welcher Bereich des Verblendkunststoffes gemessen wird. Durch diese Maßnahme ist gewährleistet, dass die Spannungen an der Grenzfläche Metall-Kunststoff geringer sind. Titan hat beispielsweise einen linearen Wärmeausdehungskoeffizienten von 8,35 x 10⁻⁶ pro Grad. Demgegenüber haben viele Kunststoffe lineare Wärmeausdehungskoeffizienten von 50 bis 100 x 10⁻⁶ pro Grad.

Die Wärmeschutzpaste kann vorteilhaft ca. 60 % Wasser, ca. 20 % Diethylenglykol sowie ca 1 % hochtemperaturfeste Fasern aufweisen, sowie geeignete wärmebeständige Füllstoffe.

Es versteht sich, dass erfindungsgemäß die Stärke der Wärmeschutzpaste in weiten Bereichen an die Erfordernisse, also die erforderliche Absenkung des Temperaturniveaus zur Bereitstellung einer spannungsfreien Härtung, angeglichen werden kann. Wenn eine Maximaltemperatur von 70°C anstelle einer Maximaltemperatur von 110°C für die Oberfläche des Metallgerüstes angestrebt werden soll, ist eine Materialstärke von 2 mm bei Verwendung handelsüblicher Wärmeschutzpasten ausreichend.

Erfindungsgemäß besonders günstig ist es, dass Metall eine vergleichsweise hohe Wärmekapazität hat. Über die Heizphase, die beispielsweise 10 Minuten betragen kann, erwärmt sich das Metallgerüst zwar durch die Umgebungsluft auch dann, wenn es mit Wärmeschutzpaste abgedeckt ist. Durch die Wärmedämmung durch die Wärmeschutzpaste erfolgt die Erwärmung jedoch weniger stark, so dass die Spitzentemperatur gegen Ende der Heizphase immer noch beispielsweise 30°C unter der Temperatur der Umgebungsluft liegt.

Mit Hilfe der Wärmeschutzpaste, welche nach dem Brennen des Restaurationsteils an diesem verbleibt, kann außerhalb des Brennofens eine Langzeitabkühlung erreicht werden. D. h. die Wärmeschutzpaste sorgt dafür, dass das gesamte Restaurationsteil, bzw. Bereiche des Restaurationsteils, nicht so schnell abkühlen. Diese Langzeitabkühlung wird derzeit mit dem Brennofen durchgeführt. Dabei verbleibt das Restaurationsteil in dem Brennofen, und die Temperatur in der Brennkammer wird zeitgesteuert heruntergefahren. Diese Langzeitabkühlung benötigt ca. 15 Minuten, welche man sich mit der Verwendung der Wärmeschutzpaste ersparen kann.

Weitere Vorteile, Einzelheiten und Merkmale ergeben sich aus der nachstehenden Beschreibung eines Ausführungsbeispieles anhand der Zeichnungen.

Es zeigen:
- Fig. 1: der Temperaturverlauf an einer viergliedrigen Brücke ohne die Verwendung einer erfindungsgemäßen Wärmeschutzpaste; und

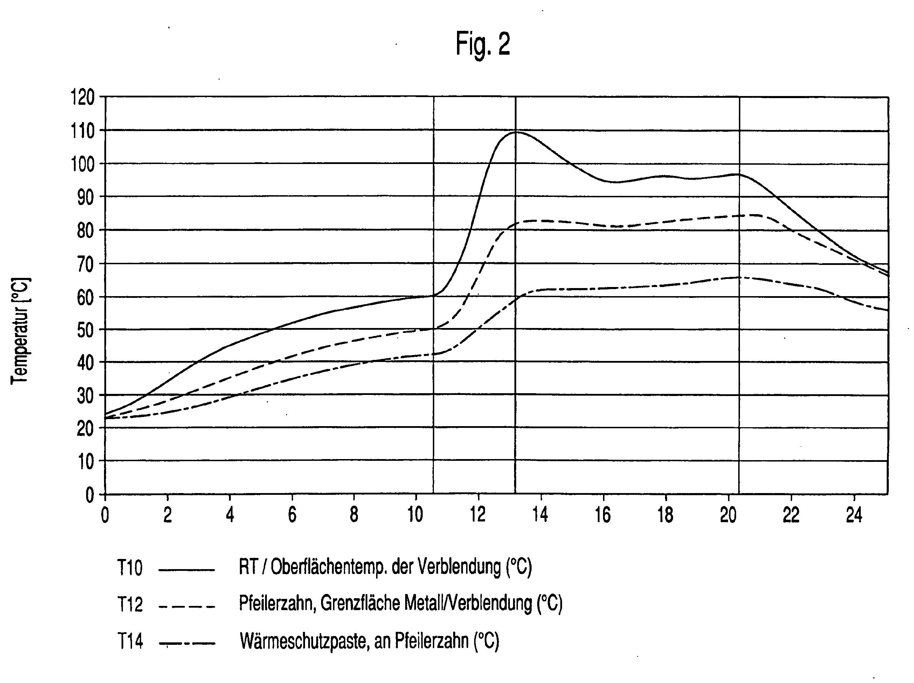

- Fig. 2: der Temperaturverlauf gemäß Fig. 1, jedoch unter Verwendung der Wärmeschutzpaste.

In einem Vergleichsversuch wurde eine Dentalrestauration einem üblichen Polymerisationsvorgang unterzogen, der die Kombination von Licht und Wärme vorsieht.

Das Dentalrestaurationsteil bestand aus einem Metallgerüst und einem Verblendkunststoff, der das Metallgerüst teilweise abdeckt. Als Verblendkunststoff wurde ein Dentalpolymer basierend auf Polymethylmetacrylat eingesetzt.

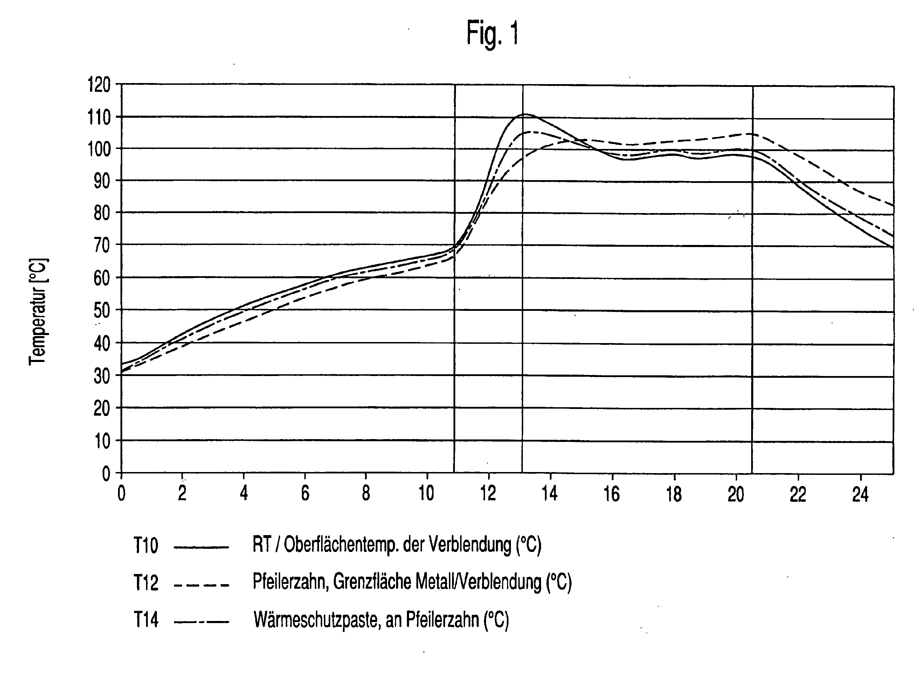

In einer Lichtphase I, die in Fig. 1 dargestellt ist, wurde das Dentalrestaurationsteil Lichtstahlung ausgesetzt. Hierbei wurden die Oberflächentemperatur T10 der Verblendung also die Umgebungstemperatur gemessen, ebenso wie die Temperatur T12 an einem Pfeilerzahn, an der Grenzfläche Metall/Verblendung.

Ferner wurde auch die Temperatur T14 an dem Pfeilerzahn selbst gemessen, der frei von einer Verblendung war.

Die Ausgangstemperaturen bei Beginn der Lichtphase I waren folgendermaßen:

| | |
|---|---|
| T10: | 34°C |
| T12: | 32°C |
| T14: | 32°C |

T10 ist normalerweise die Raumtemperatur, ansonsten die Betriebstemperatur des Ofens bei geöffnetem Deckel.

Anschließend an die Lichtphase I schloss sich die Aufheizphase II an, anschließend hieran wurde die Temperatur während der Heizphase III mit einer leichten Welligkeit gehalten, und anschließend hieran erfolgte die Abkühlung mit der Abkühlphase IV

Es wurden die folgenden Temperaturen je am Ende der betreffende Phase gemessen:

| **Meßpunkt** | **Lichtphase I** | **Aufheizphase II** | **Heizphase III** | **Abkühlphase IV** |
|---|---|---|---|---|
| T10 | 68°C | 112°C | 98°C | 70°C |
| T12 | 67°C | 97°C | 107°C | 86°C |
| T14 | 68°C | 105°C | 101°C | 74°C |

Ein gleichartiges Dentalrestaurationsteil wurde nunmehr in erfindungsgemäßer Weise mit einer Wärmeschutzpaste versehen. Zur Anwendung gelangte die Wärmeschutzpaste SR Adoro ThermoGuard der Fa. Ivoclar Vivadent AG.

Aus der nachstehenden Tabelle ergibt sich der Temperaturverlauf, wobei hier gleiche Bezeichungen wie bei Fig. 1 gewählt wurden:

| **Meßpunkt** | **Lichtphase I** | **Aufheizphase II** | **Heizphase III** | **Abkühlphase IV** |
|---|---|---|---|---|
| T10 | 60°C | 109°C | 96°C | 67°C |
| T12 | 50°C | 82°C | 85°C | 68°C |
| T14 | 42°C | 59°C | 66°C | 57°C |

Ersichtlich bleibt die Temperatur T14, also die Temperatur des Metallgerüstes, das von der Wärmeschutzpaste abgedeckt ist, signifikant unter der Temperatur in dem Ausführungsbeispiel gemäß Fig. 1.

Die visuelle Überprüfung ergab, dass die Neigung zu Spannungsrissen deutlich reduziert ist.

## Patentansprüche

1. Verfahren zur Herstellung eines dentalen Restaurationsteils mit einem Gerüst und einer Verblendung, wobei das Material der Verblendung und das Gerüstmaterial unterschiedliche Wärmeausdehnungskoeffizienten aufweisen,
**dadurch gekennzeichnet, dass** vor einer thermischen Behandlung des Restaurationsteils mindestens der größte Teil des von der Verblendung nicht abgedeckten, freiliegenden Bereichs des Gerüstes, insbesondere der gesamte freiliegende Bereich, zur Wärmedämmung mit einer Wärmeschutzpaste abgedeckt wird, wobei die Wärmeschutzpaste auf diesen Bereich aufgetragen wird.

2. Verfahren nach Anspruch 1,
**dadurch gekennzeichnet, dass** der Wärmeausdehnungskoeffizient des Materials der Verblendung kleiner als der Wärmeausdehnungskoeffizient des Gerüstmaterials ist.

3. Verfahren nach Anspruch 1,
**dadurch gekennzeichnet, dass** der Wärmeausdehnungskoeffizient des Materials der Verblendung größer als der Wärmeausdehnungskoeffizient des Gerüstmaterials ist.

4. Verfahren nach einem der vorhergehenden Ansprüche,
**dadurch gekennzeichnet, dass** bei der thermischen Behandlung das Restaurationsteil zur Aushärtung des Verblendungsmaterials erwärmt und hieran anschließend abgekühlt wird und dass die Erwärmung über Strahlungswärme oder Konvektionswärme erfolgt.

5. Verfahren nach einem der vorhergehenden Ansprüche,
**dadurch gekennzeichnet, dass** die Erwärmung des Restaurationsteils von außerhalb des Restaurationsteils erfolgt.

6. Verfahren nach einem der vorhergehenden Ansprüche,
**dadurch gekennzeichnet, dass** die Verblendung und die Wärmeschutzpaste zusammen das Gerüst abdecken und umhüllen.

7. Verfahren nach einem der vorhergehenden Ansprüche,
**dadurch gekennzeichnet, dass** das Material der Verblendung ein dual druck-hitze-, ein wärme- und/oder ein lichthärtbarer Kunststoff ist.

8. Verfahren nach einem der vorhergehenden Ansprüche,
**dadurch gekennzeichnet, dass** die Verblendung wenigstens teilweise aus Keramikmaterial besteht.

9. Verfahren nach einem der vorhergehenden Ansprüche,
**dadurch gekennzeichnet, dass** das Material des Gerüsts ein Metall oder eine Metalllegierung ist.

10. Verfahren nach einem der vorhergehenden Ansprüche,
**dadurch gekennzeichnet, dass** die Wärmeschutzpaste in einer Schichtstärke von 0,2 bis 10 mm, insbesondere 0,5 bis 2 mm und bevorzugt etwa 1 mm aufgetragen ist.

11. Verfahren nach einem der vorhergehenden Ansprüche,
**dadurch gekennzeichnet, dass** die Wärmeschutzpaste nach ihrer Verwendung während der thermischen Behandlung mechanisch entfernt und/oder abgewaschen wird.

12. Verfahren nach einem der vorhergehenden Ansprüche,
**dadurch gekennzeichnet, dass** die Wärmeschutzpaste mindestens Wasser, Diethylenglykol sowie hochtemperaturfeste Fasern enthält.

13. Verfahren nach einem der vorhergehenden Ansprüche,
**dadurch gekennzeichnet, dass** die Wärmeschutzpaste Füllstoffe, insbesondere Schichtsilikate und/oder Farbstoffe, enthält.

14. Verfahren nach einem der vorhergehenden Ansprüche,
**dadurch gekennzeichnet, dass** die Wärmeschutzpaste Polyethylenglykol enthält.

15. Verfahren nach einem der vorhergehenden Ansprüche,
**dadurch gekennzeichnet, dass** die Wärmeleitzahl der Wärmeschutzpaste kleiner als 0,1 W/cm °C ist.

16. Restaurationsteil mit einem Gerüst und einer Verblendung deren Wärmeausdehnungskoeffizient größer oder kleiner als der Wärmeausdehnungskoeffizient des Gerüstmaterials ist,
**dadurch gekennzeichnet, dass** auf mindestens dem größten Teil des von der Verblendung nicht abgedeckten Teils des Gerüstes zur thermischen Behandlung des dentalen Restaurationsteils eine Wärmeschutzpaste zur Wärmedämmung aufgetragen ist.

17. Restaurationsteil nach Anspruch 16,
**dadurch gekennzeichnet, dass** die Wärmeschutzpaste einen Wärmeleitwert aufweist, der kleiner oder gleich dem Wärmeleitwert des Verblendungsmaterials ist.

18. Verwendung einer Wärmeschutzpaste zur Wärmedämmung während der thermischen Behandlung eines Dental-Restaurationsteils, dessen Gerüst teilweise von einer Verblendung abgedeckt ist, zur Abdeckung wenigstens eines Teils des restlichen Bereichs des Gerüstes, wobei die Wärmeschutzpaste einen Wärmeleitwert von weniger als 0,5 Watt pro Zentimeter und Grad aufweist.

## Claims

1. A method for producing a dental restoration part, the dental restoration part comprising a frame and a veneer, whereby the material of the veneer and the material of the frame have different heat expansion coefficients, wherein prior to a thermal treatment of the dental restoration part, at least the principal portion of the exposed region of the frame not covered by the veneer, in particular the entirety of the exposed region of the frame, is covered with a heat protection paste for thermal insulation, said heat protection paste being applied to said region.

2. A method as claimed in claim 1, wherein the heat expansion coefficient of the material of the veneer is smaller than the heat expansion coefficient of the material of the frame.

3. A method as claimed in claim 1, wherein the heat expansion coefficient of the material of the veneer is greater than the heat expansion coefficient of the material of the frame.

4. A method as claimed in one of the preceding claims, wherein during the thermal treatment the dental restoration part is heated up in order to cure and subsequently cooled down, and wherein the heating is effected via radiation heat or convection heat.

5. A method as claimed in one of the preceding claims, wherein the heating up of the dental restoration part takes place from a location exteriorly from the dental restoration part.

6. A method as claimed in one of the preceding claims, wherein the veneer and the heat protection paste together cover and encase the frame.

7. A method as claimed in one of the preceding claims, wherein the material of the veneer is a plastic material that is capable of being cured by the dual application of pressure and heat, the application of heat, and/or the irradiation thereof with light.

8. A method as claimed in one of the preceding claims, wherein at least part of the veneer is a ceramic material.

9. A method as claimed in one of the preceding claims, wherein the material of the frame is a metal or a metal alloy.

10. A method as claimed in one of the preceding claims, wherein the heat protection paste is applied in a layer thickness of 0.2 to 10mm, in particular 0.5 to 2mm and, preferably, approximately 1mm.

11. A method as claimed in one of the preceding claims, wherein the heat protection paste is, after its application during the thermal treatment, mechanically removed from and/or washed off the dental restoration part.

12. A method as claimed in one of the preceding claims, wherein the heat protection paste contains at least water, diethylene glycol, and high-temperature resistant fibres.

13. A method as claimed in one of the preceding claims, wherein the heat protection paste contains filler material, in particular layered silicate and/or colour material.

14. A method as claimed in one of the preceding claims, wherein the heat protection paste contains polyethylene glycol.

15. A method as claimed in one of the preceding claims, wherein the coefficient of thermal conductivity of the heat protection paste is less than 0.1 W/cm °C.

16. A dental restoration part comprising a frame and a veneer, whereby the heat expansion coefficient of the material of the veneer is greater or smaller than the heat expansion coefficient of the material of the frame, wherein a heat protection paste for thermal insulation is applied to at least the principal part of the portion of the frame that is not covered by the veneer, for the thermal treatment of the dental restoration part.

17. A dental restoration part as claimed in claim 16, wherein the heat protection paste has a heat conductance value that is less than or equal to the heat conductance value of the material of the veneer.

18. Use of a heat protection paste for thermal insulation during the thermal treatment of a dental restoration part, the frame of said dental restoration part being partially covered by a veneer, said heat protection paste being used for covering at least part of the remaining region of the frame, wherein the heat protection paste has a heat conductance value of less than 0.5 watts per centimeter and degree.

## Revendications

1. Procédé de réalisation d'une pièce de reconstruction dentaire, comprenant une armature et une incrustation, le matériau de l'incrustation et le matériau de l'armature présentant des coefficients de dilatation thermique différents,
**caractérisé en ce qu'**avant un traitement thermique de la pièce de reconstruction, au moins la majeure partie de la zone de l'armature exposée, non recouverte par l'incrustation, en particulier la totalité de la zone exposée, est recouverte d'une pâte calorifuge pour l'isolation thermique, la pâte calorifuge étant appliquée à cette zone.

2. Procédé selon la revendication 1, **caractérisé en ce que** le coefficient de dilatation thermique du matériau de l'incrustation est inférieur au coefficient de dilatation thermique du matériau de l'armature.

3. Procédé selon la revendication 1, **caractérisé en ce que** le coefficient de dilatation thermique du matériau de l'incrustation est supérieur au coefficient de dilatation thermique du matériau de l'armature.

4. Procédé selon l'une quelconque des revendications précédentes, **caractérisé en ce que** lors du traitement thermique, la pièce de reconstruction est chauffée pour le durcissement du matériau d'incrustation et par la suite refroidi, et **en ce que** l'échauffement s'effectue par chaleur rayonnante ou par chaleur de convection.

5. Procédé selon l'une quelconque des revendications précédentes, **caractérisé en ce que** l'échauffement de la pièce de reconstruction s'effectue depuis l'extérieur de la pièce de reconstruction.

6. Procédé selon l'une quelconque des revendications précédentes, **caractérisé en ce que** l'incrustation et la pâte calorifuge recouvrent et enrobent ensemble l'armature.

7. Procédé selon l'une quelconque des revendications précédentes, **caractérisé en ce que** le matériau de l'incrustation est une matière plastique durcissable à la fois par pression et chaleur, par chaleur et/ou à la lumière.

8. Procédé selon l'une quelconque des revendications précédentes, **caractérisé en ce que** l'incrustation se compose au moins en partie d'un matériau céramique.

9. Procédé selon l'une quelconque des revendications précédentes, **caractérisé en ce que** le matériau de l'armature est un métal ou un alliage de métal.

10. Procédé selon l'une quelconque des revendications précédentes, **caractérisé en ce que** la pâte calorifuge est appliquée avec une épaisseur de couche de 0,2 à 10 mm, en particulier de 0,5 à 2 mm, et de préférence d'environ 1 mm.

11. Procédé selon l'une quelconque des revendications précédentes, **caractérisé en ce qu'**après son utilisation pendant le traitement thermique, la pâte calorifuge est retirée mécaniquement et/ou nettoyée par lavage.

12. Procédé selon l'une quelconque des revendications précédentes, **caractérisé en ce que** la pâte calorifuge comprend au moins de l'eau, du diéthylèneglycol ainsi que des fibres à haute résistance thermique.

13. Procédé selon l'une quelconque des revendications précédentes, **caractérisé en ce que** la pâte calorifuge comprend des matières de remplissage, en particulier des silicates en couches et/ou des colorants.

14. Procédé selon l'une quelconque des revendications précédentes, **caractérisé en ce que** la pâte calorifuge comprend du polyéthylèneglycol.

15. Procédé selon l'une quelconque des revendications précédentes, **caractérisé en ce que** la conductivité thermique de la pâte calorifuge est inférieure à 0,1 W/cm °C.

16. Pièce de reconstruction comprenant une armature et une incrustation dont le coefficient de dilatation thermique est supérieur ou inférieur au coefficient de dilatation thermique du matériau d'armature,
**caractérisée en ce que** sur au moins la majeure partie de la partie de l'armature non recouverte par l'incrustation, pour le traitement thermique de la pièce de reconstruction dentaire, une pâte calorifuge pour l'isolation thermique est appliquée.

17. Pièce de reconstruction selon la revendication 16, **caractérisée en ce que** la pâte calorifuge présente une conductivité thermique qui est inférieure ou égale à la conductivité thermique du matériau d'incrustation.

18. Utilisation d'une pâte calorifuge pour l'isolation thermique pendant le traitement thermique d'une pièce de reconstruction dentaire dont l'armature est partiellement recouverte par une incrustation, afin de recouvrir au moins une partie de la zone restante de l'armature, dans laquelle la pâte calorifuge présente une conductivité thermique de moins de 0,5 Watt par centimètre et degré.
